# EUROPÄISCHE PATENTANMELDUNG

(11) **EP 3 933 525 A1**
(43) Veröffentlichungstag der Anmeldung: **05.01.2022**
(21) Anmeldenummer: 20183510.5
(22) Anmeldetag: 01.07.2020
(51) Int. Cl.: G05B 19/4061, G05B 19/4069

(54) **MODELLDATENBASIERTER KOLLISIONSSCHUTZ**

(71) Anmelder: Siemens Aktiengesellschaft, 80333 München (DE)
(72) Erfinder: Amthor, Karl-Josef, 82229 Seefeld (DE); Bretschneider, Jochen, 88696 Owingen (DE); Rehm, Hansjörg, 91083 Baiersdorf (DE); Stapper, Norbert, 91056 Erlangen (DE); Tolkmitt, Tom, 90768 Fürth (DE)

(57) **Zusammenfassung**

Bei einem Verfahren zum Betrieb einer Werkzeugmaschine (20), aufweisend eine Numerische Steuerung (30) und mehrere lagegeregelte Achsen zum Bewegen eines Werkzeugs (1) relativ zu einem Werkstück (5), wobei in der Numerischen Steuerung (30) Werkzeugdaten zum Bestimmen eines Werkzeugmodells, Werkstückdaten zum Bestimmen eines Werkstückmodells sowie Maschinendaten zum Bestimmen eines Maschinenmodells erfasst werden und wobei unter Berücksichtigung des Werkzeugmodells, des Werkstückmodells und des Maschinenmodells die Bewegungen des Werkzeugs (1) relativ zu dem Werkstück (5) zum Erkennen von Kollisionen simuliert werden, ist vorgesehen, dass bei den Werkzeugdaten Daten bezüglich der Geometrie wenigstens eines schneidenden Teils (S) des Werkzeugs (1) und Daten bezüglich der Geometrie wenigstens eines nichtschneidenden Teils des Werkzeugs (1) erfasst werden, wobei auf Basis der Daten bezüglich der Geometrie wenigstens des nichtschneidenden Teils des Werkzeugs (1) Kollisionen des nichtschneidenden Teils des Werkzeugs (1) mit dem Werkstück (5) erkannt werden.

Die Kollisionserkennung wird dadurch verbessert und vereinfacht.

## Beschreibung

Die Erfindung betrifft ein Verfahren zum Betrieb einer Werkzeugmaschine, aufweisend eine Numerische Steuerung und mehrere lagegeregelte Achsen zum Bewegen eines Werkzeugs relativ zu einem Werkstück, wobei in der Numerischen Steuerung Werkzeugdaten zum Bestimmen eines Werkzeugmodells, Werkstückdaten zum Bestimmen eines Werkstückmodells sowie Maschinendaten zum Bestimmen eines Maschinenmodells erfasst werden und wobei unter Berücksichtigung des Werkzeugmodells, des Werkstückmodells und des Maschinenmodells die Bewegungen des Werkzeugs relativ zu dem Werkstück zum Erkennen von Kollisionen simuliert werden.

Aus der EP 2 515 192 A1 ist ein Verfahren zur Vermeidung einer ungewollten Kollision zwischen einem Werkzeug und einem Werkstück bei einer Werkzeugmaschine bekannt, wobei anhand einer Bremsendanordnung des Werkzeugs und eines die geometrische Form des Werkzeugs beschreibenden Werkzeugformmodells ein Werkzeugmodell ermittelt wird und wobei überprüft wird, ob das Werkzeugmodel sich mit einem eine geometrische Form des Werkstücks beschreibenden vorgegebenen Werkstückmodell überschneidet.

Aus der EP 2 919 081 A1 ist ein Betriebsverfahren für eine mit einer Numerischen Steuerung verbundene Werkzeugmaschine bekannt, bei dem Maschinenelemente, einem Werkstück und einem Werkzeug innerhalb der Numerischen Steuerung virtuelle Schutzkörper zugeordnet sind, wobei die Numerische Steuerung vor dem Ansteuern von lagegeregelten Achsen der Werkzeugmaschine Volumina ermittelt, die von den Schutzkörpern bei Ansteuerung der lagegeregelten Achsen gemäß einer Sequenz von Lagesollwerten eingenommen würden, und prüft, ob - soweit erforderlich, mit Ausnahme der durch das Werkzeug am Werkstück vorzunehmenden Bearbeitung - die Schutzkörper hierbei disjunkt voneinander bleiben. Wird bei dieser der realen Bearbeitung vorauseilenden Simulation festgestellt, dass sich Schutzkörper überschneiden, so wird dies als drohende Kollision erkannt und die Werkzeugmaschine rechtzeitig vor einer die realen Maschinenelemente, das reale Werkstück oder das reale Werkzeug betreffenden Kollision angehalten.

Nachteilig bei den bekannten Verfahren zum Betrieb von Werkzeugmaschinen ist, dass dabei mittels einer Kollisionserkennungseinrichtung Kollisionen in Verbindung mit einem Werkzeug der Werkzeugmaschine nicht immer erkannt werden.

Ferner müssen Geometriedaten von Schutzkörpern, die im Zusammenhang mit der Kollisionserkennung verwendet werden, bislang oft umständlich in die Numerische Steuerung eingegeben werden.

Aufgabe der vorliegenden Erfindung ist es daher, die Kollisionserkennung zu verbessern und zu vereinfachen.

Diese Aufgabe wird gelöst durch ein Verfahren zum Betrieb einer Werkzeugmaschine, aufweisend eine Numerische Steuerung und mehrere lagegeregelte Achsen zum Bewegen eines Werkzeugs relativ zu einem Werkstück, wobei in der Numerischen Steuerung Werkzeugdaten zum Bestimmen eines Werkzeugmodells, Werkstückdaten zum Bestimmen eines Werkstückmodells sowie Maschinendaten zum Bestimmen eines Maschinenmodells erfasst werden, wobei unter Berücksichtigung des Werkzeugmodells, des Werkstückmodells und des Maschinenmodells die Bewegungen des Werkzeugs relativ zu dem Werkstück zum Erkennen von Kollisionen simuliert werden, wobei die Werkzeugdaten Daten bezüglich der Geometrie wenigstens eines schneidenden Teils des Werkzeugs und Daten bezüglich der Geometrie wenigstens eines nichtschneidenden Teils des Werkzeugs umfassen und wobei auf Basis der Daten bezüglich der Geometrie wenigstens des nichtschneidenden Teils des Werkzeugs Kollisionen des nichtschneidenden Teils des Werkzeugs mit dem Werkstück erkannt werden. Ferner wird die Aufgabe gelöst durch eine Numerische Steuerung zur Durchführung des Verfahrens sowie eine Werkzeugmaschine mit einer derartigen Steuerung.

Die betreffenden Werkzeugdaten, Werkstückdaten und Maschinendaten umfassen insbesondere die Daten, die die geometrischen Formen und Abmessungen der betreffenden Teile bestimmen. Beispielsweise bei einem Fräswerkzeug fallen darunter dessen Länge und Durchmesser. Einige der Maschinendaten dienen der Bestimmung von Form, Größe und/oder Position von Maschinenelementen, wie z.B. einem Werkstücktisch, aber auch von lösbar mit der Maschine verbindbaren Elementen wie Aufspannelementen, Werkzeughaltern, Werkzeugadaptern etc.

Aus den betreffenden Daten werden in der Numerischen Steuerung, häufig auch als CNC (Computerized Numerical Control) bezeichnet, das Werkzeugmodell, das Werkstückmodell sowie das Maschinenmodell generiert. Die Simulation der von der Maschine durchzuführenden Bearbeitung zum frühzeitigen Erkennen von Kollisionen erfolgt dann auf Basis der genannten Modelle.

Gemäß der Erfindung umfassen die Werkzeugdaten neben den bereits genannten Daten auch Daten bezüglich der Geometrie wenigstens eines schneidenden Teils des Werkzeugs und Daten bezüglich der Geometrie wenigstens eines nichtschneidenden Teils des Werkzeugs. Beispielsweise wird so bei einem Fräswerkzeug unterschieden zwischen der Länge des schneidenden Teils des Fräsers und der Länge des nichtschneidenden Schaftes. Die erfindungsgemäße Vorgehensweise ist jedoch nicht auf derart einfach aufgebaute Werkzeuge wie einen einfachen Fräser beschränkt, sondern sie kann bei beliebigen Werkzeugen angewendet werden, insbesondere auch bei Werkzeugen mit einer Vielzahl an Schneidplatten oder Werkzeugen, bei denen sich schneidende und nichtschneidende Bereiche abwechseln.

Die Erfindung bietet mehrere Vorteile. Einerseits wird die Kollisionserkennung dahingegen erweitert, dass drohende Berührungen eines nichtschneidenden Bereiches des Werkzeugs mit dem Werkstück als Kollision erkannt werden können. Andererseits erleichtert die Erfindung die Erzeugung der im Zusammenhang mit der Kollisionserkennung oftmals verwendeten Schutzkörper. Mussten die Schutzkörper bislang separat in der Numerischen Steuerung angelegt werden, so kann die Numerische Steuerung nun beispielsweise auf die in der Steuerung hinterlegten Werkzeugdaten zugreifen und auf deren Basis Schutzkörper für das betreffende Werkzeug generieren. Alle ein bestimmtes Werkzeug betreffenden Daten werden so an einer zentralen Stelle, z.B. einer bestimmten Bildschirm-Eingabemaske, und in einem Arbeitsvorgang in der Numerischen Steuerung erfasst.

Einfache Werkzeuge wie einfache Fräser oder Bohrer sind in der Regel zylinderförmig und unterteilt in einen schneidenden Teil und einen daran direkt angrenzenden nichtschneidenden Teil. Die Geometrie derartiger Werkzeuge ist daher durch Angabe der Werkzeuglänge, der Werkzeugschneidenlänge (also der Länge des schneidenden Teils des Werkzeugs) und des Werkzeugdurchmessers, der in der Regel auch dem Werkzeugschneidendurchmesser entspricht, hinlänglich bestimmt. Die Numerische Steuerung kann auf diese Angaben sowohl für die Bahnerzeugung als auch für die Bestimmung von Schutzkörpern bei der Kollisionsvermeidung zurückgreifen. Insbesondere kann dadurch ein zur Kollisionserkennung zwischen Werkstück und Werkzeug benötigter Schutzkörper (Hüllkörper) des nichtschneidenden Teils des Werkzeugs automatisch durch die Numerische Steuerung generiert werden.

Bei einer Ausführungsform der Erfindung werden die Werkzeugdaten in Form einer Anzahl von Geometrieobjekten wie Geraden oder Kreissegmenten erfasst und für jedes Geometrieobjekt wird festgelegt, ob es einen schneidenden Teil des Werkzeugs oder einen nichtschneidenden Teil des Werkzeugs betrifft. Dadurch kann auch bei komplizierteren Werkzeugen, beispielsweise Werkzeugen mit mehreren Schneidplatten, zwischen schneidenden und nichtschneidenden Bereichen unterschieden werden. Insbesondere können nicht alle Werkzeuge über die Werkzeugdrehmitte schneiden, z.B. Gewindebohrer oder Reibahlen. Um zu gewährleisten, dass beim Einsatz eines solchen Werkzeugs die entsprechende Vorbearbeitung (z.B. Vorbohrung) an dem Werkstück durchgeführt wurde, wird auch der nichtschneidende Werkzeuginnenteil bei der Kollisionsbetrachtung berücksichtigt.

Zum Speichern der die Werkzeuggeometrie betreffenden Werkzeugdaten gibt es verschiedene Möglichkeiten. Einerseits können die Geometriedaten mit Bezug zu einer Symmetrielinie des Werkzeugs in Verbindung mit einem Bezugspunkt (Nullpunkt) festgelegt werden. Die Werkzeuggeometrie wird dann durch eine Anzahl von Punkten bezüglich dieses Bezugssystems bestimmt. Andererseits kann die Werkzeuggeometrie auch als Konturzug erfasst werden. Diese Möglichkeit bietet sich insbesondere bei Werkzeugen mit einem komplizierteren geometrischen Aufbau an. Der Konturzug setzt sich aus zusammenhängenden Linienelementen zusammen, insbesondere Geraden und Kreissegmenten. So lassen sich auch bei komplizierteren Werkzeugen deren Geometrie bzw. deren die Geometrie betreffende Daten schnell und einfach erfassen, insbesondere durch eine Anzahl von Längenangaben und Radien.

Werkzeuge sind häufig zumindest im Wesentlichen symmetrisch bezüglich einer Symmetrielinie aufgebaut. Dies trifft zumeist zumindest auf Werkzeuge mit rundem Querschnitt zu, beispielsweise Bohrer oder Fräser. Daneben gibt es aber auch nichtsymmetrische Werkzeuge oder Werkzeuge mit rechteckigem Querschnitt. Bei derartigen Werkzeugen lässt sich die Geometrie nicht vollständig durch einen ebenen Konturzug festlegen. Neben einem in der Ebene verlaufenden Konturzug reicht häufig jedoch auch wenigstens eine Angabe bezüglich einer dritten Dimension, um die Werkzeuggeometrie vollständig zu beschreiben, z.B. die Dicke eines Drehmeißels mit rechteckigem Querschnitt.

Prinzipiell ist die Werkzeuggeometrie im Zusammenhang mit der Erfindung nicht auf die vorgenannten Beispiele beschränkt, sondern es können Werkzeuge mit beliebiger Geometrie verwendet werden, die dann zur Modellierung durch entsprechende geometrische Formen bzw. Objekte beschrieben werden.

Eine Ausführungsform der Erfindung sieht vor, dass neben dem Werkzeug auch die Geometrie eines Werkzeughalters durch entsprechende, den Werkzeughalter betreffende Maschinendaten, nachfolgend auch Werkzeughalterdaten genannt, erfasst werden. Auch die Werkzeughalterdaten werden vorzugsweise als Konturzug erfasst.

Eine Ausführungsform der Erfindung sieht vor, dass auch die Geometrie eines Werkzeugadapters durch entsprechende, den Werkzeugadapter betreffende Maschinendaten, nachfolgend auch Werkzeugadapterdaten genannt, erfasst werden. Auch die Werkzeugadapterdaten werden vorzugsweise als Konturzug erfasst.

Eine Ausführungsform der Erfindung sieht vor, dass auch die Geometrie einer Werkzeugverlängerung durch entsprechende, die Werkzeugverlängerung betreffende Maschinendaten, nachfolgend auch Werkzeugverlängerungsdaten genannt, erfasst werden. Auch die Werkzeugverlängerungsdaten werden vorzugsweise als Konturzug erfasst.

Sowohl Werkzeughalter als auch Werkzeugadapter als auch Werkzeugverlängerung sind - zumindest was ihre äußere Form anbelangt - in der Regel rotationssymmetrisch. Dadurch lässt sich die äußere Form jeweils durch einen Konturzug in einfacher Weise exakt beschreiben.

Besonders einfach gestaltet sich die Beschreibung der äußeren Form des Werkzeugs, des Werkzeughalters und ggf. des Werkzeugadapters, wenn diese für den miteinander verbundenen Zustand als Einheit betrachtet und durch einen einzigen, alle Teile umfassenden Konturzug beschrieben werden. Der Aufwand zur Datenerfassung ist so auf ein Minimum begrenzt.

Bei einer Ausführungsform der Erfindung werden die Werkzeugdaten und/oder die den Werkzeughalter, den Werkzeugadapter oder die Werkzeugverlängerung betreffenden Maschinendaten durch manuelle Eingabe durch einen Benutzer an einer Bedienoberfläche der Numerischen Steuerung in der Numerischen Steuerung erfasst.

Eine andere Ausführungsform der Erfindung sieht vor, dass die Werkzeugdaten und/oder die den Werkzeughalter, den Werkzeugadapter oder die Werkzeugverlängerung betreffenden Maschinendaten über eine Schnittstelle der Numerischen Steuerung aus einer externen Datenbank auf die Numerische Steuerung übertragen und dort erfasst werden. Die manuelle Eingabe der Daten direkt an der Maschine erübrigt sich dadurch.

Eine weitere Ausführungsform der Erfindung sieht vor, dass die Werkzeugdaten und/oder die den Werkzeughalter, den Werkzeugadapter oder die Werkzeugverlängerung betreffenden Maschinendaten mit in der Numerischen Steuerung vorab gespeicherten, typischen Werten vorbelegt werden. Häufig sind diese Daten für die Kollisionserkennung ausreichend und die exakten Daten der betreffenden Teile müssen nicht in der Numerischen Steuerung erfasst werden.

Die Erfindung wird nachfolgend anhand von Ausführungsbespielen näher erläutert. Dabei zeigen:
- FIG 1: Eine von einer Numerischen Steuerung gesteuerte Werkzeugmaschine,
- FIG 2: ein Werkzeug, einen Werkzeughalter und einen Werkzeugadapter sowie deren Darstellung in der Numerischen Steuerung gemäß dem Stand der Technik,
- FIG 3: ein Beispiel für eine bislang nicht erkannte Kollision,
- FIG 4: die Verwendung von Schutzkörpern zur Kollisionserkennung gemäß dem Stand der Technik,
- FIG 5: Werkzeug und Werkzeughalter in der Realität und im Modell,
- FIG 6: einen Drehmeißel in Realität und im Modell,
- FIG 7: Werkzeugdaten für ein Werkzeug mit nichtschneidendem Innenteil und
- FIG 8: Verfahrensschritte eines erfindungsgemäßen Verfahrens.

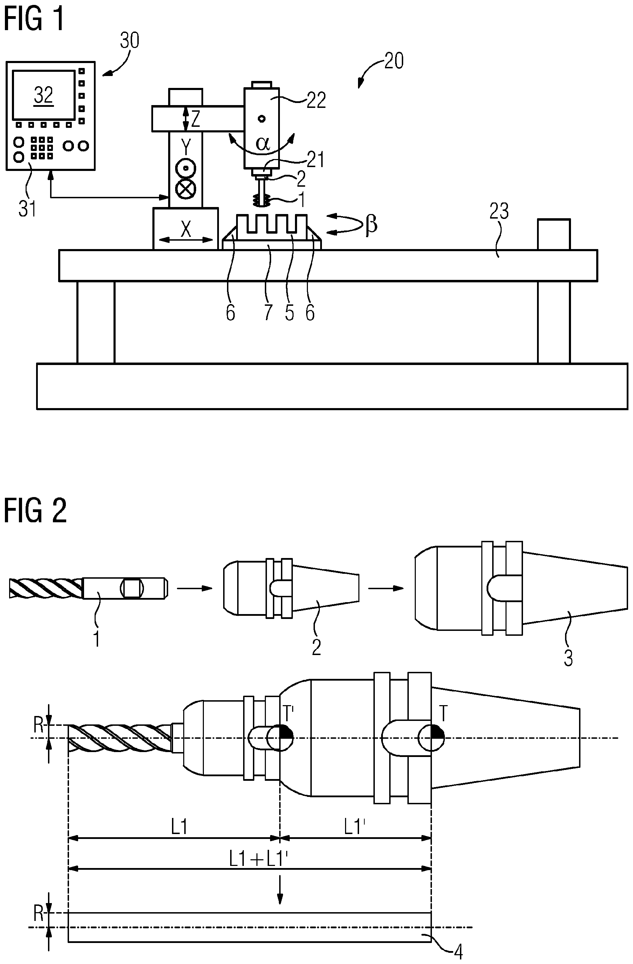

In FIG 1 ist schematisiert eine Werkzeugmaschine 20 dargestellt. Die Werkzeugmaschine 20 verfügt im Rahmen des Ausführungsbeispiels über fünf Maschinenachsen, durch die eine Relativbewegung zwischen einem Werkzeug 1, das im Rahmen des Ausführungsbeispiels in Form eines Fräsers 1 vorliegt, und einem Werkstück 5 durchgeführt werden kann. Das Werkzeug 1 ist dabei in einen Werkzeughalter 2 eingespannt, der mit einer Werkzeugspindel 21 verbunden ist, die von einem Motor 22 rotatorisch angetrieben wird. Der Motor 22 und damit das Werkzeug 1 lassen sich mit der Übersichtlichkeit halber in FIG 1 nicht dargestellten Antrieben in X-, Y- und Z-Richtung translatorisch bewegen und in Richtung α drehen. Weiterhin kann das Werkstück 5 mit Hilfe eines angetriebenen Werkstücktisches 7 in Richtung β gedreht werden. Der Werkstücktisch 7 ist dabei auf einem ruhenden Maschinengestell 23 drehbar gelagert.

Das Werkstück 5 ist durch Spannmittel 6 am Werkstücktisch 7 befestigt.

Die Werkzeugmaschine 20 weist somit fünf Maschinenachsen auf, d.h. es handelt sich um eine sogenannte 5-achsige Werkzeugmaschine.

Es sei dabei an dieser Stelle angemerkt, dass die Werkzeugmaschine 20 selbstverständlich auch noch mehr oder weniger als fünf Maschinenachsen aufweisen kann.

Die Werkzeugmaschine 20 ist mit einer Numerischen Steuerung 30 verbunden, die anhand eines Teileprogramms und/oder einer Handbedieneingabe Bewegungssollwerte x, y, z, α und β zur Steuerung einer zwischen dem Werkzeug 1 und dem Werkstück 5 stattfindenden Relativbewegung ermittelt. Die Numerische Steuerung 30 ermittelt die Bewegungssollwerte anhand des Teileprogramms, in dem die von dem Werkzeug 1 in Bezug zum Werkstück 5 durchzuführende Bewegung in Form von Befehlen definiert ist. Alternativ oder zusätzlich kann die Bewegung des Werkzeugs 1 und/oder das Werkstücks 5 auch mittels einer Handbedieneingabe über eine Bedieneinrichtung 31 in Verbindung mit einer Anzeigevorrichtung 32 der Numerischen Steuerung 30 von einem Bediener vor Ort an der Werkzeugmaschine 20 vorgegeben werden. Die Bedieneinrichtung 31 weist hierzu insbesondere Tasten, Drehregler oder einen Touchscreen auf.

Das Teileprogramm wird dabei üblicherweise von einem CAM/CAD-System (nicht dargestellt) und einem eventuell dem CAM/CAD-System nachgeschalteten sogenannten Postprozessor (nicht dargestellt) außerhalb der Numerischen Steuerung 30 erzeugt und von dort auf die Numerische Steuerung 30 übertragen.

Bei der Abarbeitung des Teileprogramms erzeugt die Numerische Steuerung 30 in einem bestimmten Takt, dem Interpolationstakt, Lagesollwerte x, y und z für die Linearachsen sowie Winkelsollwerte α und β für die Rundachsen. Durch diese Bewegungssollwerte wird das Werkzeug 1 mit vorgegebener Orientierung relativ zu dem Werkstück 5 entlang einer Bewegungsbahn bewegt.

Die Numerische Steuerung 30 gemäß der Erfindung umfasst eine Kollisionserkennungseinrichtung (nicht dargestellt), mittels derer drohende Kollisionen zwischen Teilen der Werkzeugmaschine 20, dem Werkzeug 1 sowie dem Werkstück 5 in einer Simulation der Bewegungen vorausberechnet und dadurch Kollisionen bei der realen Werkzeugmaschine 20 verhindert werden können. Dazu werden der Kollisionserkennungseinrichtung die Bewegungssollwerte x, y, z, α und β zugeführt, aus denen die Kollisionserkennungseinrichtung zu erwartende, zukünftige Bewegungssollwerte x', y', z' α' und β' ermittelt. Die zukünftigen Bewegungswerte werden dabei im Rahmen des Ausführungsbeispiels durch Extrapolation aus den aktuell von der Numerischen Steuerung 30 erzeugten Bewegungssollwerten und aus weiter in der Vergangenheit liegenden Bewegungssollwerten ermittelt. So kann z.B. aus den aktuellen Bewegungssollwerten und den in der Vergangenheit liegenden Bewegungssollwerten die Geschwindigkeit des Werkzeugs 1 in jeder Richtung berechnet werden und anhand dieser Geschwindigkeit eine zu erwartende zukünftige Lage des Werkzeugs 1 ermittelt werden. Vorzugsweise werden dabei die Bewegungssollwerte nur um wenige Interpolationstakte der Numerischen Steuerung 30, d.h. in der Regel nur um wenige Millisekunden in die Zukunft vorausberechnet. Die zu erwartenden zukünftigen Bewegungssollwerte stimmen somit sehr genau mit den tatsächlichen zukünftigen Bewegungssollwerten überein.

Weiterhin sind in der Kollisionserkennungseinrichtung die Geometrie des Werkzeugs 1, des Werkstücks 5 sowie von in Bezug auf Kollisionen relevanter Maschinenteile betreffende Daten hinterlegt, aus denen die Kollisionserkennungseinrichtung ein Werkzeugmodell, ein Werkstückmodell sowie ein Maschinenmodell generiert. Ferner bestimmt die Kollisionserkennungseinrichtung aus den Bewegungssollwerten die Position und Orientierung der einzelnen Modelle.

Die Kollisionserkennungseinrichtung erkennt dann eine Kollision, wenn bei den Modellen in ihren durch die ermittelten, zukünftigen Bewegungssollwerte x', y', z' α' und β' vorbestimmten Positionen zu Überschneidungen kommt.

Die verwendeten Modelle können verhältnismäßig exakte Abbilder ihrer realen Pendants darstellen, sie können sich aber auch aus einfachen geometrischen Körpern (Quader, Zylinder, Kugeln, Kegel etc.) zusammensetzten, die sog. Schutzkörper oder Einhüllende bilden. Letzteres reduziert die zur Kollisionserkennung benötigte Rechenleistung.

Wenn die Kollisionserkennungseinrichtung feststellt, dass sich zwei oder mehr der genannten Modelle bei den ermittelten zukünftigen Bewegungssollwerten überschneiden, so bewirkt sie ein Abbremsen der Relativbewegung zwischen Werkzeug 1 und Werkstück 5 bis zum Stillstand der Relativbewegung.

FIG 2 zeigt oben ein Werkzeug 1, einen Werkzeughalter 2 sowie einen Werkzeugadapter 3 als Einzelteile. Darunterliegend sind die drei genannten Teile in ihrem zusammengefügten und für die Kollisionserkennung relevanten Zustand abgebildet. Bei dieser Anordnung sind bislang typischerweise die folgenden Maschinenparameter in der Numerischen Steuerung hinterlegt:
- Werkzeugtyp
- Werkzeugradius R
- Gesamtlänge L1 + L1'
- Adapter-Bezugspunkt T

Aus diesen Angaben generiert eine Numerische Steuerung gemäß dem Stand der Technik den in FIG 2 unten dargestellten Schutzkörper 4 mit der Länge L1 + L1' und dem Radius R. Für die Kollisionsbetrachtung bleiben daher der Werkzeughalter 2 und der Werkzeugadapter 3 weitgehend unberücksichtigt und auch die Länge der Schneide des Werkzeugs 1 wird bei der Kollisionsbetrachtung bislang nicht berücksichtigt.

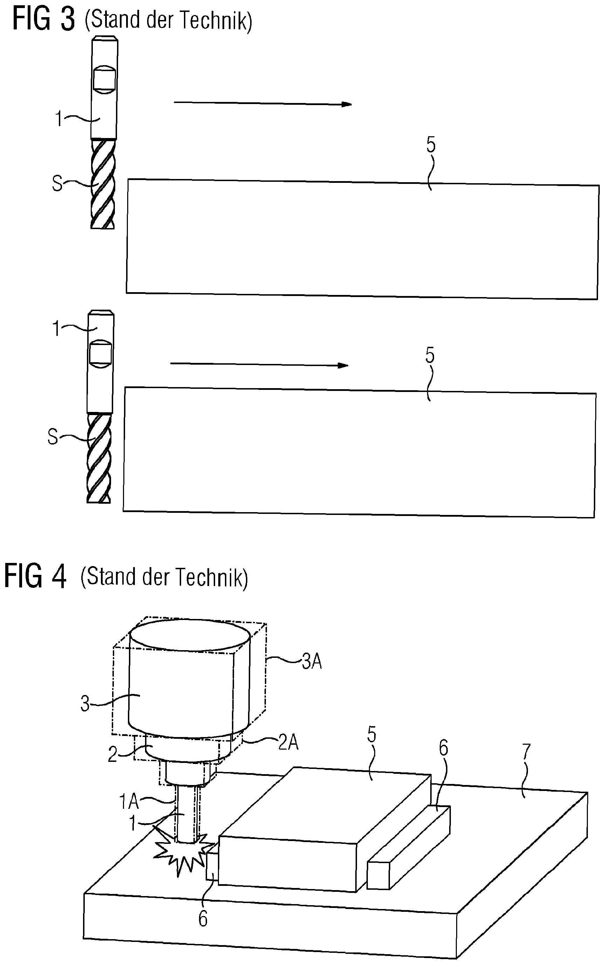

FIG 3 veranschaulicht ein bei der bisherigen Vorgehensweise resultierendes Problem. Ein Werkzeug, im Ausführungsbeispiel ein Fräser 1, soll zur Bearbeitung eines Werkstücks 5 in Pfeilrichtung relativ zu dem Werkstück 5 bewegt werden. In der oberen Darstellung gemäß FIG 3 führt dies zu einer normalen Fräsbearbeitung des Werkstücks 5.

Im unteren Teil von FIG 3 ist eine Situation dargestellt, bei der das Fräswerkzeug 1 mit der Scheide S zu tief in das Werkstück 5 eintaucht. Das Werkzeug 1 müsste sich daher auch in einem Bereich außerhalb der Schneide S durch das Werkstück 5 bewegen, was technisch nicht möglich ist. Es handelt sich daher um eine Situation, bei der es wünschenswert wäre, dass eine Einrichtung zur Kollisionsüberprüfung diese Situation rechtzeitig erkennt und eine Fehlermeldung ausgibt, anstatt das Werkzeug in der gezeigten Weise gegenüber dem Werkstück zu bewegen.

FIG 4 zeigt eine ebenfalls aus dem Stand der Technik bekannte Vorgehensweise zur frühzeitigen Erkennung von Kollisionen. Ein auf einem Maschinentisch 7 mittels Spannmitteln 6 befestigtes Werkstück 5 soll durch ein Werkzeug 1, welches durch einen Werkzeughalter 2 und einen Werkzeugadapter 3 mit einer Spindel (nicht dargestellt) einer Werkzeugmaschine (nicht dargestellt) verbunden ist, bearbeitet werden. Zur Kollisionserkennung werden das Werkzeug 1, der Werkzeughalter 2 und der Werkzeugadapter 3 durch entsprechende quaderförmige Schutzkörper 1A, 2A sowie 3A modelliert. Die quaderförmigen Schutzkörper 1A, 2A und 3A bringen zwar einen Vorteil gegenüber der in FIG 2 dargestellten Situation, sie erzeugen jedoch zusätzlichen Parametrierungsaufwand in der CNC.

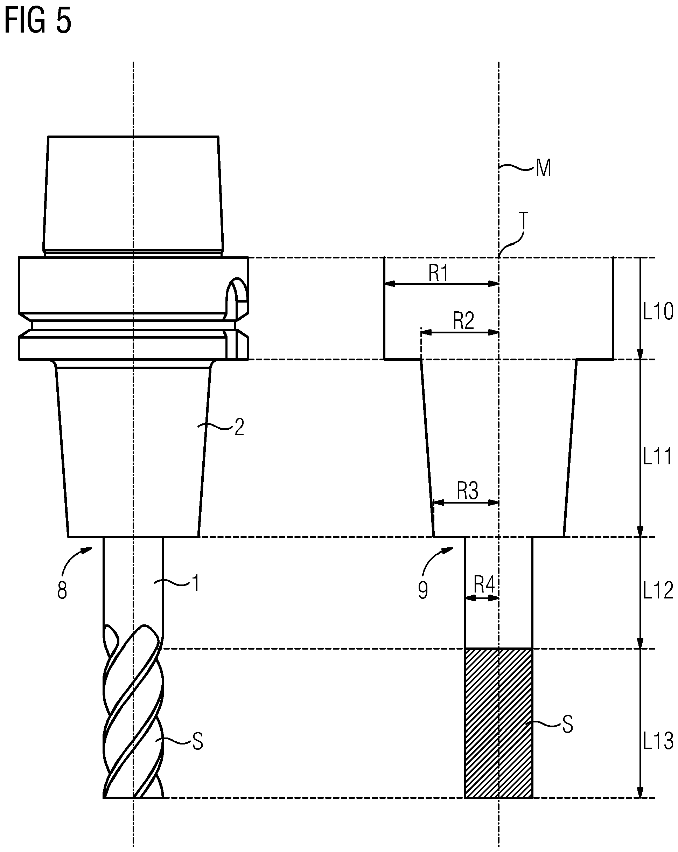

FIG 5 zeigt ein Werkzeug 1, im Ausführungsbeispiel ein Fräser, mit einer Schneide S. Das Werkzeug 1 befindet sich in einem in einen Werkzeughalter 2 eingespannten Zustand. Aus der rechten Hälfte von FIG 5 wird ersichtlich, wie daraus das entsprechende Modell in der Numerischen Steuerung erzeugt wird. Ausgehend von einem Bezugspunkt T, der in der Numerischen Steuerung beispielsweise das Ende einer mit dem Werkzeughalter 2 direkt verbindbaren Werkzeugspindel (nicht dargestellt) kennzeichnet, erfolgen die Angaben zu dem Werkzeughalter 2 und das Werkzeug 1 betreffenden Längenangaben in Form eines Kettenmaßes. Selbstverständlich können alle Längenangaben aber auch auf ein und denselben Bezugspunkt bezogen und nicht in Form eines Kettenmaßes angegeben werden.

Gemäß dem Ausführungsbeispiel bezeichnet L10 die Länge eines zylinderförmigen oberen Teils des Werkzeughalters 2. Daran schließt sich ein sich konusförmig verjüngender Teil mit der Länge L11 an. Die Bemaßung des Werkzeugs 1 ist ebenfalls zweigeteilt in einen zylinderförmigen hinteren Teil des Werkzeugs 1 im Bereich zwischen dem Werkzeughalter 2 und der Schneide S. Dieser Teil besitzt die Länge L12. Der Bereich der Schneide S des Werkzeugs 1 ist in der Figur schraffiert dargestellt und weist die Länge L13 auf.

Anders als im Stand der Technik gemäß Fig 2, bei dem ausgehend von der Spindel lediglich eine Gesamtlänge für das Werkzeug und den Halter, bzw. eine Gesamtlänge für das Werkzeug, den Halter und den Werkzeugadapter für den Fall, dass ein optionaler Werkzeugadapter vorhanden ist, in der Steuerung hinterlegt ist, werden im Zusammenhang mit der Erfindung weitere Geometrieangaben hinterlegt, im Beispiel die Maße L10, L11, L12 und L13 sowie der Bezugspunkt T bezüglich des Werkzeughalters. Im Unterschied zu der Ausführung gemäß Fig 2 lässt sich dadurch die Kollisionserkennung mit nur geringem zusätzlichen Aufwand wesentlich verbessern.

Da die Außenkonturen von Werkzeug 1 und Werkzeughalter 2 wenigstens im Wesentlichen symmetrisch zu der Symmetrielinie M sind, genügt neben den Längenangaben die Angabe der aus der Figur ersichtlichen Radien R1 bis R4, um die Geometrie der Außenseiten von Werkzeug 1 und Werkzeughalter 2 - zumindest in guter Näherung - vollständig zu beschreiben.

Durch die ersichtlichen Angaben, die beispielsweise durch manuelle Eingaben in der Numerische Steuerung erfasst werden, können für die Kollisionserkennung hinreichend genaue Modelle des realen Werkzeugs 1 und des realen Werkzeughalters 2 in der Numerischen Steuerung erzeugt werden. Insbesondere können in der Numerischen Steuerung entsprechende Schutzkörper zur Kollisionserkennung erzeugt werden.

Die für das Werkzeug 1 und den Werkzeughalter 2 beschriebene Vorgehensweise lässt sich in analoger Weise auch auf einen optional vorhandenen Werkzeugadapter (nicht dargestellt) oder eine optional vorhandene Werkzeugverlängerung (nicht dargestellt) erweitern.

Weiterhin können das Werkzeug 1 und den Werkzeughalter 2 auch als Einheit 8 aus Werkzeug 1 und Werkzeughalter 2 aufgefasst werden, denen die Einheit 9 aus Modell des Werkzeugs 1 und Modell des Werkzeughalter 2 entspricht. Im Rahmen der Erfindung könnte auch die Einheit 8 bzw. 9 in einen schneidenden und einen nichtschneidenden Teil unterteilt werden und es könnte daher bei der Kollisionserkennung auch untersucht werden, ob eine Kollision des nichtschneidenden Teils der Einheit 8 bzw. 9 mit dem Werkstück zu erwarten ist. Ggf. können die Einheiten 8 bzw. 9 auch einen Werkzeugadapter (nicht dargestellt) und/oder eine Werkzeugverlängerung (nicht dargestellt) umfassen.

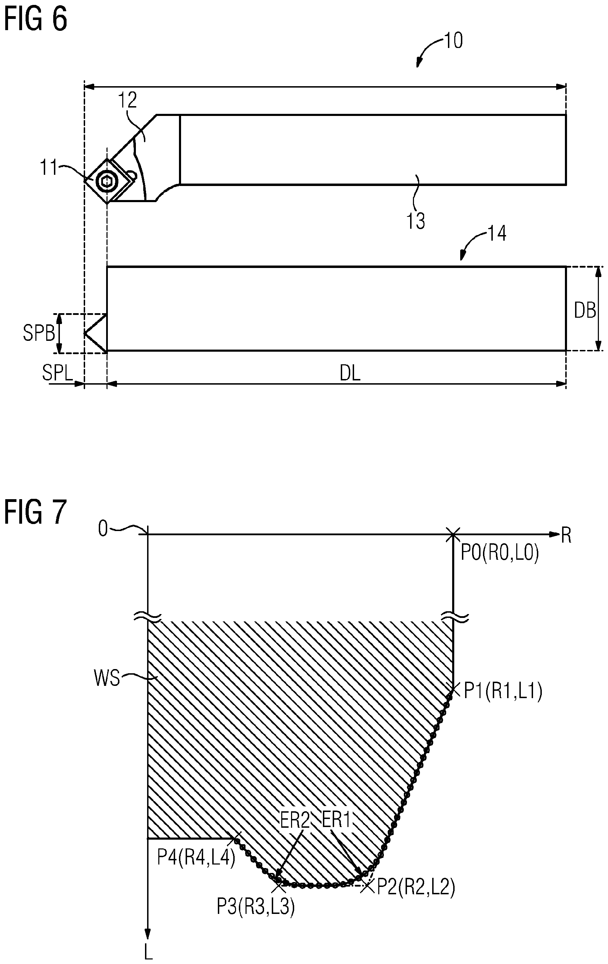

FIG 6 zeigt in der oberen Hälfte der Figur einen realen Drehmeißel 10. Dieser weist zur spanabhebenden Drehbearbeitung eines Werkstücks an seinem vorderen Ende eine Schneidplatte 11 auf, die an einem Werkzeug-Grundkörper 12 fixiert ist. Zur Befestigung des Drehmeißels 10 mit einem Werkzeughalter weist der Drehmeißel 10 ferner einen Schaft 13 mit rechteckigem Querschnitt auf.

In der unteren Hälfte von FIG 6 ist ein automatisch generiertes Modell 14 des Drehmeißels 10 ersichtlich. Hierzu musste in der Numerischen Steuerung lediglich die Angabe "Standard-Drehmeißel" gewählt werden, damit für das Modell 14 die einmal in der Numerischen Steuerung hinterlegten Standardwerte DL für die Länge des Drehmeißels 10 (Länge Schaft 13 + Länge Werkzeug-Grundkörper 12), DB für die Breite des Drehmeißels 10 (gesamte Breite von Schaft 13 und Werkzeug-Grundkörper 12), die Länge der Schneidplatte SPL und die Breite der Schneidplatte SPB automatisch festgelegt werden. Wurden die Standardwerte einmal in der Numerischen Steuerung hinterlegt, so kann auf diese in vielen Anwendungsfällen mit hinreichender Genauigkeit zurückgegriffen werden und die Eingabe der Maße des konkret verwendeten Werkzeuges erübrigt sich.

Vorteilhaft ist für das Modell 14 des Drehmeißels 10 gemäß dem Ausführungsbeispiel auch ein Maß für die Höhe DH (nicht dargestellt) des Schafts 13 mit rechteckigem Querschnitt hinterlegt, so dass beispielsweise ein entsprechender dreidimensionaler Schutzkörper, auch als Hüllkörper bezeichnet, für die Simulation einer Bearbeitung zur Kollisionserkennung in der Numerischen Steuerung verwendet werden kann.

FIG 7 veranschaulicht die Bestimmung von Werkzeugdaten für ein Werkzeug mit nichtschneidendem Innenteil. Dargestellt ist eine Hälfte einer symmetrischen Werkzeugspitze WS mit der Achse L als Symmetrielinie. Die Achse L bildet mit der Achse R zudem ein kartesisches Koordinatensystem mit dem Ursprung O. Die Kontur der Werkzeugspitze WS ist durch die Punkte P1 (R1, L1); P2 (R2, L2); P3 (R3, L3) und P4 (R4, L4) bestimmt. Zudem sind in den Punkten P2 und P3 die Ecken verrundet, wobei die Eckenradien ER1 und ER2 betragen sollen. Vorzugsweise können die Werkzeugdaten und insbesondere die die Werkzeugspitze WS betreffenden Daten mittels einer grafischen Bedienoberfläche als zusammenhängender Konturzug in der Numerischen Steuerung erfasst werden. Dies vereinfacht die Eingabe und veranschaulicht die Zusammenhänge zwischen den einzelnen Abschnitten des Werkzeugs.

Weiterhin wird bei der Werkzeugspitze WS gemäß dem Ausführungsbeispiel unterschieden zwischen schneidenden Bereichen, dargestellt als gepunktete Linien, und nichtschneidenden Bereichen, dargestellt als durchgezogene Linien. Für jedes Liniensegment der Werkzeugspitze WS wird in der Numerischen Steuerung erfasst, ob es sich um einen schneidenden Teil des Werkzeugs oder einen nichtschneidenden Teil handelt.

Wie FIG 7 zu entnehmen ist, besitzt die Werkzeugspitze WS einen nichtschneidenden Innenteil, hier dargestellt der Bereich zwischen dem Punkt P4 und der Symmetrielinie L. Mit diesem Werkzeug ist es daher nicht möglich, in Richtung der Koordinatenachse L in Material einzutauchen. Durch die detaillierte Bestimmung der Werkzeugspitze WS würde eine derartige Bewegung von der Numerischen Steuerung bei einer Kollisionsprüfung als unzulässig erkannt werden. Eine drohende Kollision könnte so rechtzeitig verhindert werden.

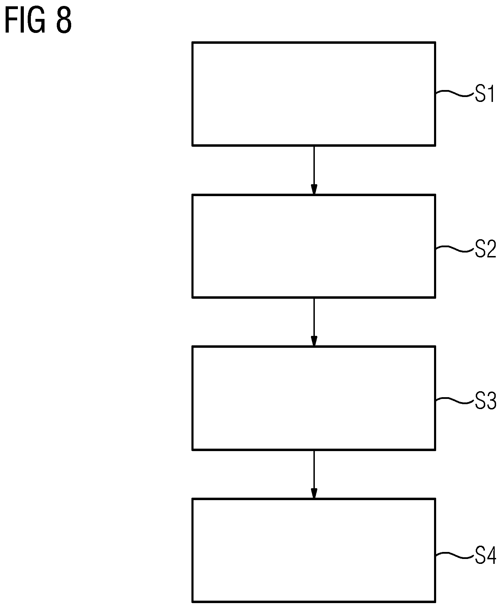

FIG 8 verdeutlicht nochmals wesentliche Verfahrensschritte eines erfindungsgemäßen Verfahrens. In einem Verfahrensschritt S1 werden Daten eines Werkzeugmodells, eines Werkstückmodells und eines Maschinenmodells in einer Numerischen Steuerung erfasst.

In einem Verfahrensschritt S2 werden bei den Werkzeugdaten Daten bezüglich der Geometrie wenigstens eines schneidenden Teils des Werkzeugs und Daten bezüglich der Geometrie wenigstens eines nichtschneidenden Teils des Werkzeugs erfasst.

In einem Verfahrensschritt S3 werden auf Basis der erfassten Daten des Werkzeugmodells, des Werkstückmodells und des Maschinenmodells die entsprechenden Modelle generiert, wobei das Werkzeugmodell Geometriedaten bezüglich wenigstens eines schneidenden Teils der Werkzeugs und Geometriedaten bezüglich wenigstens eines nichtschneidenden Teils des Werkzeugs umfasst.

In einem Verfahrensschritt S4 werden zur Vermeidung von Kollisionen die zu erwartenden Bewegungen des Werkzeugs gegenüber dem Werkstück vorausberechnet, wobei Bewegungen des Werkzeugs relativ zu dem Werkstück zum Erkennen von Kollisionen anhand analoger Bewegungen der generierten Modelle simuliert werden. Erfindungsgemäß können dabei auch Kollisionen des nichtschneidenden Teils des Werkzeugs mit dem Werkstück erkannt werden.

## Patentansprüche

1. Verfahren zum Betrieb einer Werkzeugmaschine (20), aufweisend eine Numerische Steuerung (30) und mehrere lagegeregelte Achsen zum Bewegen eines Werkzeugs (1) relativ zu einem Werkstück (5), wobei in der Numerischen Steuerung (30) Werkzeugdaten zum Bestimmen eines Werkzeugmodells, Werkstückdaten zum Bestimmen eines Werkstückmodells sowie Maschinendaten zum Bestimmen eines Maschinenmodells erfasst werden, wobei unter Berücksichtigung des Werkzeugmodells, des Werkstückmodells und des Maschinenmodells die Bewegungen des Werkzeugs (1) relativ zu dem Werkstück (5) zum Erkennen von Kollisionen simuliert werden, **dadurch gekennzeichnet, dass** die Werkzeugdaten Daten bezüglich der Geometrie wenigstens eines schneidenden Teils (S) des Werkzeugs (1) und Daten bezüglich der Geometrie wenigstens eines nichtschneidenden Teils des Werkzeugs (1) umfassen, wobei auf Basis der Daten bezüglich der Geometrie wenigstens des nichtschneidenden Teils des Werkzeugs (1) Kollisionen des nichtschneidenden Teils des Werkzeugs (1) mit dem Werkstück (5) erkannt werden.

2. Verfahren nach Anspruch 1, wobei die Werkzeugdaten wenigstens eine Werkzeugschneidenlänge und/oder wenigstens einen Werkzeugschneidendurchmesser umfassen.

3. Verfahren nach Anspruch 1 oder 2, wobei die Numerische Steuerung (30) anhand der Daten bezüglich der Geometrie wenigstens des nichtschneidenden Teils des Werkzeugs (1) automatisch einen Hüllkörper des nichtschneidenden Teils des Werkzeugs (1) generiert.

4. Verfahren nach einem der Ansprüche 1 bis 3, wobei die Werkzeugdaten in Form einer Anzahl von Geometrieobjekten erfasst werden und wobei für die Geometrieobjekte festgelegt wird, ob sie einen schneidenden Teil des Werkzeugs (1) oder einen nichtschneidenden Teil des Werkzeugs (1) betreffen.

5. Verfahren nach Anspruch 4, wobei die Geometrieobjekte einen Konturzug bilden.

6. Verfahren nach einem der Ansprüche 1 bis 5, wobei einen Werkzeughalter (2) betreffende Maschinendaten als Werkzeughalterdaten erfasst werden.

7. Verfahren nach einem der Ansprüche 1 bis 6, wobei einen Werkzeugadapter (3) betreffende Maschinendaten als Werkzeugadapterdaten erfasst werden.

8. Verfahren nach einem der Ansprüche 1 bis 7, wobei eine Werkzeugverlängerung betreffende Maschinendaten als Werkzeugverlängerungsdaten erfasst werden.

9. Verfahren nach einem der Ansprüche 1 bis 8, wobei die Werkzeughalterdaten und/oder die Werkzeugadapterdaten und/oder die Werkzeugverlängerungsdaten in Form einer Anzahl von Geometrieobjekten, die einen Konturzug bilden, erfasst werden.

10. Verfahren nach einem der Ansprüche 1 bis 9, wobei die Werkzeugdaten und/oder die den Werkzeughalter, den Werkzeugadapter oder die Werkzeugverlängerung betreffenden Maschinendaten durch manuelle Eingabe durch einen Benutzer an einer Bedienoberfläche der Numerischen Steuerung (30) in der Numerischen Steuerung (30) erfasst werden.

11. Verfahren nach einem der Ansprüche 1 bis 9, wobei die Werkzeugdaten und/oder die den Werkzeughalter (2), den Werkzeugadapter (3) oder die Werkzeugverlängerung betreffenden Maschinendaten über eine Schnittstelle der Numerischen Steuerung (30) aus einer externen Datenbank auf die Numerische Steuerung (30) übertragen und dort erfasst werden.

12. Verfahren nach einem der Ansprüche 1 bis 9, wobei die Werkzeugdaten und/oder die den Werkzeughalter (2), den Werkzeugadapter (3) oder die Werkzeugverlängerung betreffenden Maschinendaten mit in der Numerischen Steuerung (30) vorab gespeicherten, typischen Werten vorbelegt werden.

13. Numerische Steuerung (30) zur Durchführung eines Verfahrens nach einem der Ansprüche 1 bis 12, aufweisend Mittel zum Erfassen von Daten bezüglich einer Geometrie wenigstens eines schneidenden Teils (S) eines Werkzeugs (1) und Daten bezüglich einer Geometrie wenigstens eines nichtschneidenden Teils des Werkzeugs (1) und eine Kollisionserkennungseinheit zum Erkennen einer Kollision zwischen dem nichtschneidenden Teil des Werkzeugs (1) und einem Werkstück (5) auf Basis der erfassten Daten.

14. Werkzeugmaschine (20) mit einer Numerischen Steuerung (30) nach Anspruch 13.
